# FASCICULE DE BREVET EUROPEEN

(11) **EP 2 078 149 B1**
(45) Date de publication et mention de la délivrance du brevet: **09.02.2011**
(21) Numéro de dépôt: 07823856.5
(22) Date de dépôt: 26.09.2007
(51) Int. Cl.: F02D 41/14

(54) **PROCEDE DE CONTROLE EN BOUCLE FERMEE DE QUANTITE D'UREE POUR SYSTEME DE TRAITEMENT D'OXYDES D'AZOTE**
VERFAHREN ZUR REGELUNG EINER HARNSTOFFMENGE FÜR EIN STICKOXIDVERARBEITUNGSSYSTEM
METHOD FOR THE CLOSED-LOOP CONTROL OF A UREA AMOUNT FOR A NITROGEN OXIDE PROCESSING SYSTEM

(30) Priorité: 13.10.2006 FR 0654252
(43) Date de publication de la demande: 15.07.2009
(73) Titulaire: Peugeot Citroën Automobiles SA, 78140 Vélizy-Villacoublay (FR)
(72) Inventeur: AUDOUIN, Arnaud, 75018 Paris (FR); LESUEUR, Jean Nicolas, F-92250 La Garenne Colombes (FR)
(74) Mandataire: Ménès, Catherine
(86) Numéro de dépôt international: PCT/FR2007/052011
(87) Numéro de publication internationale: WO 2008/043928

(56) Documents cités:
- DE-A1- 3 704 030
- US-A1- 2005 282 285
- US-B1- 6 427 439

## Description

La présente invention concerne un procédé de pilotage de l'injection d'urée pour un système de traitement à réduction catalytique sélective (SCR) d'oxydes d'azote en sortie d'un moteur de véhicule.

Plus particulièrement, l'invention concerne un procédé de contrôle de la quantité d'urée injectée pour un système de traitement d'oxydes d'azote.

Il est connu, dans l'industrie, d'utiliser l'ammoniac pour effectuer une réduction d'oxydes d'azote selon les réactions de type SCR. Un tel processus est particulièrement intéressant dans le cas des industries stationnaires pour lesquelles le problème de stockage de l'ammoniac en grande quantité ne se pose pas.

Dans le cas de l'automobile, il est connu d'utiliser, de la même façon, de l'ammoniac, notamment contenu dans de l'urée, pour réaliser la réduction des oxydes d'azote en sortie de moteur. Cette réduction est effectuée en faisant réagir les oxydes d'azote avec de l'ammoniac et/ou de l'urée, dans un catalyseur spécifique, appelé catalyseur SCR. Le problème qui apparaît dans le cas de l'automobile est celui du stockage de l'ammoniac. Il est donc utile, de déterminer de façon précise la quantité d'ammoniac à injecter dans le moteur à chaque instant, afin d'optimiser la réduction des oxydes d'azote tout en limitant les émissions d'ammoniac. L'invention concerne donc un procédé de détermination de la quantité d'ammoniac destiné à être intégré dans une stratégie globale de pilotage de l'injection d'ammoniac et/ou d'urée dans un moteur de véhicule.

L'objectif principal de tout système de dépollution de type SCR est d'optimiser le compromis entre une conversion d'oxydes d'azote élevée et une émission limitée d'ammoniac non converti.

Il est connu de déterminer, à partir de paramètres du moteur ou extérieurs, une quantité d'urée prédéterminée, à injecter dans le catalyseur SCR pour effectuer la réduction des oxydes d'azote. Mais ces systèmes présentent généralement l'inconvénient d'être en boucle ouverte, c'est à dire qu'il n'existe pas de moyens de contrôler le caractère optimum de cette quantité d'urée. Le document US2005/0282285 propose d'observer le signal d'un capteur Nox et lorsqu'il dépasse une valeur donnée, envoyer un pulse pour détecter si la valeur anormalement élevée est liée à un excès de Nox ou de NH_{3.}

L'invention vise donc à remédier à cet inconvénient, en proposant un procédé de contrôle en boucle fermée de l'injection.

Plus particulièrement, l'invention concerne un procédé de contrôle de la quantité d'urée injectée dans un système de traitement d'oxydes d'azote à réduction catalytique sélective, selon la revendication 1.

Un des avantages de ce procédé est qu'il permet de prendre en compte les éventuelles dérives du système, qui peuvent avoir une influence sur l'efficacité du système ou la quantité d'ammoniac consommée.

Dans un véhicule, notamment équipé d'un moteur de type Diesel, il existe plusieurs sources de dérive, pouvant entraîner une diminution de l'efficacité du système.

Un premier type de dérive est la dérive des émissions en oxydes d'azote du moteur. En effet, lorsque les injecteurs gazole ou le débitmètre d'admission d'air sont encrassés, la quantité d'oxydes d'azote réellement émise par le moteur est plus élevée que celle prédite par un éventuel modèle de calcul. En effet, un modèle calcule les quantités d'oxydes d'azote théoriques en fonction de paramètres mesurés dans le moteur ; or, si certains éléments du moteur sont encrassés, les paramètres mesurés ne sont pas toujours représentatifs de la réalité. En conséquence, la quantité d'urée calculée grâce à ce modèle, et donc injectée dans le catalyseur, est trop faible par rapport au besoin réel. La conversion des oxydes d'azote est donc plus faible que l'optimum.

Par ailleurs, le catalyseur SCR dans lequel ont lieu les réactions de réduction peut se dégrader, notamment du fait des fortes températures d'échappement générées lors des régénérations du filtre à particules du véhicule. Or, la détermination de quantité d'ammoniac décrite précédemment tient également compte des paramètres du catalyseur. Si le catalyseur se dégrade, la quantité d'ammoniac déterminée par le modèle de calcul n'est plus valable, ce qui se traduit par des mauvaises performances du système, notamment en ce qui concerne la conversion des oxydes d'azote à basse température.

Dans le cas où l'ammoniac utilisé est contenu dans une solution d'urée, il est possible que cette solution se dégrade lentement dans le réservoir de stockage présent dans le véhicule. En effet, lorsqu'elle est stockée longtemps et/ou à fortes températures, l'urée s'hydrolyse en ammoniac. Ainsi, lors de l'injection dans le catalyseur, la solution injectée ne contient plus les mêmes quantités d'urée et d'ammoniac que celles présentes initialement, quantités à partir desquelles le calcul est généralement effectué.

Une réduction catalytique sélective d'oxydes d'azote par l'ammoniac est effectuée selon plusieurs réactions chimiques, dont les trois principales sont :

4NO + 4NH₃ + O₂ -> 4N₂ + 6H₂O

3NO₂ + 4NH₃ -> 3.5N₂ + 6H₂O

4NH₃ + 2NO + 2NO₂ -> 4N, + 6H₂O

Dans ce type de réduction, il est théoriquement possible d'atteindre des conversions supérieures à 90%.

Au vu des réactions principales, on peut constater que l'évolution des quantités d'oxydes d'azote et d'ammoniac en sortie du catalyseur est la même. En effet, une réduction des oxydes d'azote est obligatoirement liée à une consommation d'ammoniac NH₃.

Pour effectuer les mesures de quantité de gaz en sortie du catalyseur, on place un capteur d'oxydes d'azote dans la ligne d'échappement du moteur. Ce capteur d'oxydes d'azote permet également, dans une certaine mesure, de mesurer l'ammoniac NH₃ présent dans l'échappement en aval du catalyseur. Un exemple de capteur sera décrit plus loin dans le texte.

Dans une réalisation, la quantité d'urée initiale est calculée à l'aide d'un modèle prédéterminé prenant en compte des paramètres du moteur et de l'environnement.

Par exemple, pour déterminer cette quantité d'urée initiale, on peut utiliser un procédé comprenant les étapes suivantes:
- l'étape de déterminer le temps de séjour des gaz sur le catalyseur SCR, ce temps de séjour étant appelé VVH
- l'étape d'extraire d'une mémoire des données permettant de déterminer un rapport optimal entre la quantité d'ammoniac introduit dans le catalyseur et la quantité d'oxydes d'azote à réduire, ce rapport étant tel qu'on obtient la meilleure conversion d'oxydes d'azote possible tout en respectant une quantité limite d'ammoniac non converti, ces données étant choisies en fonction du temps de séjour VVH,
- l'étape de calculer, à partir de ce rapport optimal et du débit d'oxydes d'azote dans la ligne d'échappement du moteur, la quantité d'ammoniac à injecter dans le catalyseur
- l'étape de déduire, à partir de la quantité d'ammoniac déterminée, la quantité d'urée à injecter,

On peut également, au cours des différentes étapes, tenir compte d'autres paramètres tels que la température extérieure, la température d'eau du moteur, la pression atmosphérique, ou encore la température à l'intérieur du catalyseur d'oxydation.

Ainsi que décrit précédemment on injecte, au cours d'une étape du procédé, une nouvelle quantité d'urée correspondant à la quantité d'urée initiale multipliée par un coefficient d'injection initial. Au vu des dérives pouvant avoir lieu dans le moteur, on constate que généralement il est nécessaire d'injecter une quantité d'urée supérieure à une quantité d'urée théorique qui serait déterminée par un modèle. Ainsi, on choisit d'injecter plus d'urée ; dans ce cas, le coefficient d'injection initial est supérieur à 1, et il est appelé coefficient de Sur Injection.

A l'issue de cette modification de quantité d'urée, il est possible de mesurer les nouvelles quantités d'oxydes d'azote et d'ammoniac présents dans la ligne d'échappement en sortie du catalyseur.

Pour une condition de gaz donnée, lorsqu'on augmente la quantité d'urée injectée vers le catalyseur SCR, deux cas peuvent se présenter :
- si la mesure du capteur diminue, cela signifie que la quantité d'urée a été consommée pour réduire une plus grande quantité d'oxydes d'azote.
- A l'inverse, si la mesure du capteur augmente, cela signifie qu'une quantité similaire d'oxydes d'azote a été réduite, et que la quantité d'ammoniac non converti dans le catalyseur augmente.

Ainsi, selon l'évolution constatée, à l'issue de la comparaison avec les mesures initiales, on détermine s'il est nécessaire de diminuer ou d'augmenter la quantité d'urée.

Pour cela, il est possible de jouer sur la valeur du coefficient d'injection appliqué au cours d'une des étapes du procédé.

Ainsi, lorsque les quantités mesurées d'oxydes d'azote et d'ammoniac sont en diminution, cela signifie qu'il est nécessaire d'injecter davantage d'urée par rapport à la quantité injectée précédemment. Dans ce cas, le coefficient d'injection est supérieur à 1, et il est alors appelé coefficient de sur injection.

Au contraire, lorsque les quantités mesurées d'oxydes d'azote et d'ammoniac sont en augmentation, cela signifie que la quantité d'ammoniac dégagée risque de devenir trop importante, et dans ce cas il est nécessaire de diminuer la quantité d'urée injectée. Dans ce cas, le coefficient d'injection est inférieur à 1, et il est appelé coefficient de sous injection.

Un des objectifs du procédé décrit ici est de déterminer la quantité optimale d'urée à injecter en amont du catalyseur dans lequel à lieu la réaction. Pour cela, il est nécessaire de procéder par paliers, c'est à dire d'essayer plusieurs quantités et d'ajuster le coefficient d'injection à chaque étape en fonction des résultats obtenus.

Ainsi, par exemple, il est possible que, dans une réalisation, les quantités d'oxydes d'azote et d'ammoniac augmentent après avoir diminué. Cela signifie que l'on se trouvait, au préalable, à une quantité inférieure à la quantité optimale d'urée, et donc que l'on a augmenté cette quantité.

A partir du moment où les quantités d'oxydes d'azote et d'ammoniac augmentent, c'est le signe que la quantité d'urée optimale a été dépassée. Il est donc nécessaire de re-diminuer la quantité d'urée injectée, sans toutefois redescendre plus bas que la quantité injectée à l'étape précédente. A cet effet, le nouveau coefficient de sous injection appliqué est supérieur à l'inverse du coefficient de sur injection précédemment appliqué.

Au contraire, dans une réalisation où les quantités d'oxydes d'azote et d'ammoniac diminuent après avoir augmenté, on applique un coefficient de sur injection inférieur à l'inverse du coefficient de sous injection précédemment appliqué, et la nouvelle quantité d'urée calculée à partir de ce coefficient de sur injection est la quantité optimale d'urée à injecter.

Dans une réalisation, on détermine un facteur de correction finale, correspondant à la quantité d'urée optimale divisée par la quantité initiale d'urée.

Le fonctionnement d'un catalyseur de type SCR, tel que celui utilisé pour la mise en oeuvre du procédé décrit ici, est fortement dépendant des conditions de gaz, telles que leur composition, la température, ou encore le débit. Ainsi, pour que le procédé soit efficace, il est nécessaire qu'il soit mis en oeuvre lorsque le véhicule est dans des conditions stables.

A cet effet, dans une réalisation on modifie la quantité d'urée injectée uniquement dans le cas où des conditions de roulage stables se présentent.

Des conditions stables sont définies, par exemple, par le fait que la position pédale, définissant le régime moteur, ainsi que la température échappement restent dans un certain intervalle pendant une durée déterminée. Un exemple de conditions stables est un véhicule dont le régime reste entre 1500 et 1700 tours/min pendant une durée supérieure à 5 secondes.

Dans une réalisation l'urée est sous forme d'urée liquide pure ou de solution d'urée.

D'autres caractéristiques et avantages de l'invention apparaîtront avec la description de certains de ses modes de réalisation, cette description étant réalisée à titre non limitatif à l'aide des figures sur lesquelles:
- la figure 1 est un schéma d'un système SCR, installé dans un moteur de type Diesel, et mettant en oeuvre un procédé selon l'invention,
- les figures 2 et 3 sont des exemples de mesures effectuées par un capteur d'oxydes d'azote,
- la figure 4 est un graphe d'états montrant le déroulement d'un procédé selon l'invention,
- la figure 5 est un graphique montrant une optimisation de débit d'urée, et
- les figures 6a et 6b représentent l'architecture fonctionnelle d'un module de pilotage d'injection d'urée installé sur un véhicule et mettant en oeuvre un procédé conforme à l'invention.

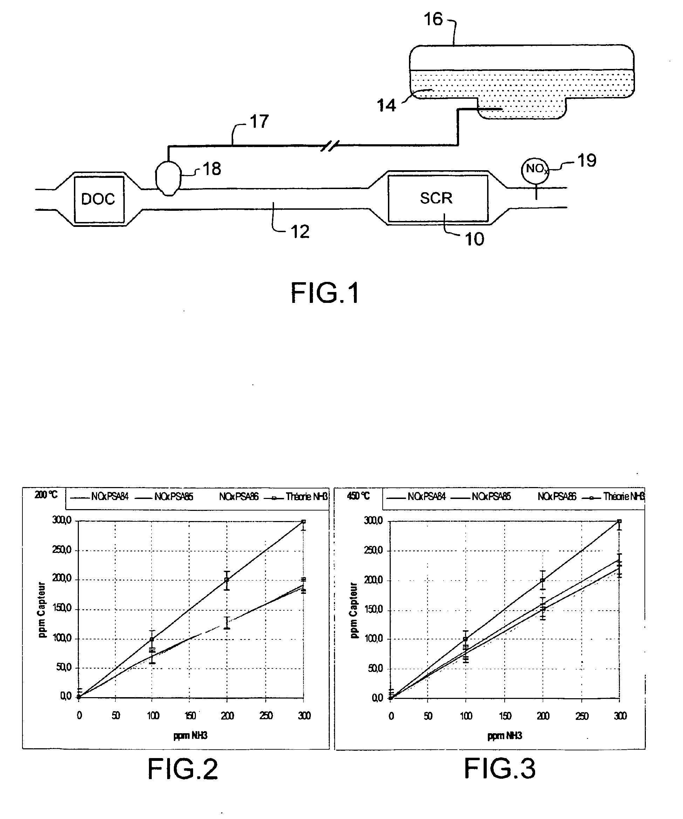

Le système représenté sur la figure 1 est un système de traitement d'oxydes d'azote destiné à transformer les oxydes d'azote en les faisant réagir avec de l'ammoniac contenu dans de l'urée, selon un procédé de réduction catalytique sélective SCR. Les réactions chimiques de ce procédé ont lieu dans un catalyseur SCR 10.

En entrée de ce catalyseur 10 se trouvent les gaz présents dans la ligne d'échappement 12 du moteur, contenant notamment des oxydes d'azote.

Pour que la réaction de réduction ait lieu dans le catalyseur SCR 10, il est nécessaire d'introduire un réducteur, tel que de l'ammoniac contenu dans de l'urée 14, dans le catalyseur 10. Cette urée 14 est stockée dans un réservoir spécifique 16. Elle est envoyée, via un système d'alimentation 17, vers un injecteur spécifique 18. Cet injecteur 18 injecte alors l'urée 14 dans la ligne d'échappement 12, en aval du catalyseur SCR 10.

Selon les réalisations, le réservoir 16 peut contenir de l'ammoniac sous différentes formes, notamment sous forme d'urée liquide pure ou sous forme d'un additif tel que l'AdBlue, qui est une solution d'urée à 32,5%.

En sortie du catalyseur 10 se trouve un capteur d'oxydes d'azote 19. Ce capteur d'oxydes d'azote peut également être utilisé pour mesurer les quantités d'ammoniac dégagées.

Ce capteur est, par exemple, un capteur présentant une non-sélectivité ammoniac/oxydes d'azote. Dans ce cas, la détection de l'ammoniac est basée sur l'oxydation de cet ammoniac en monoxyde d'azote, selon la réaction 4NH₃ + 5O₂ -> 4NO + 6H₂O.

Il est à noter qu'un tel capteur n'a pas une sensibilité à l'ammoniac de 100%. En effet, ainsi qu'on peut le voir sur les figures 2 et 3, il existe un phénomène de saturation du signal issu de ce capteur, pour des fortes teneurs en ammoniac.

Sur les figures 2 et 3, on voit les réponses de différents capteurs d'oxydes d'azote à des températures respectives de 200°C et 450 °C. Ces graphiques représentent l'évolution des quantités d'ammoniac NH3 mesurées par le capteur, en parties par millions (ppm), en fonction des quantités d'ammoniac réelles, en ppm. Il apparaît sur ces deux graphiques que le phénomène de saturation intervient très tôt puisque dès 50 ppm d'ammoniac, on voit un écart significatif entre la quantité mesurée et la quantité réelle.

Néanmoins, pour l'utilisation qui nous intéresse, de tels capteurs sont largement suffisants, puisqu'ils permettent de détecter, au moins de manière grossière, la présence d'ammoniac, ainsi que l'évolution des quantités, en sortie du catalyseur SCR.

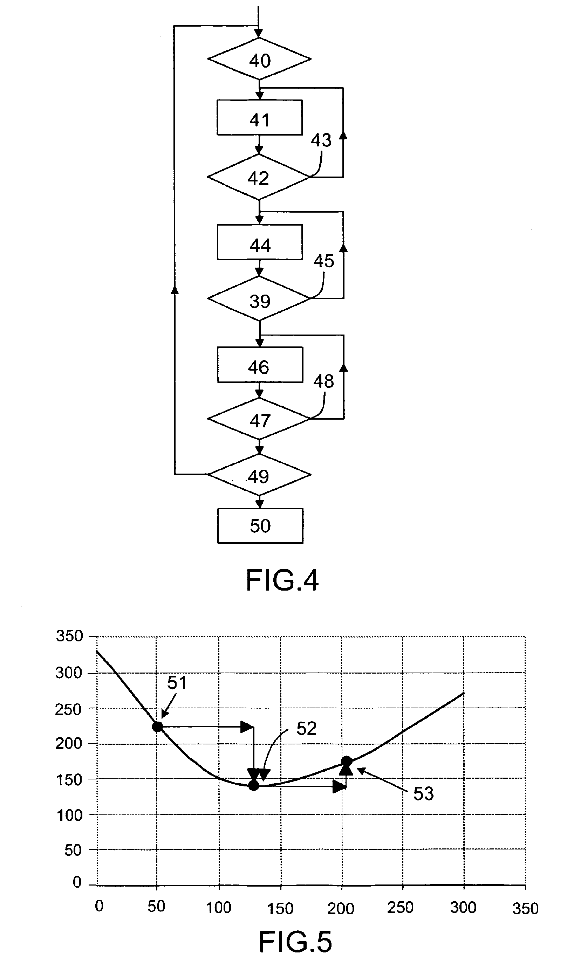

Les mesures effectuées par ce capteur sont utilisées par un procédé conforme à l'invention, pour déterminer la quantité optimale d'urée à injecter dans la ligne d'échappement du moteur. Les différentes étapes d'un tel procédé sont illustrées sur la figure 4.

Ainsi qu'expliqué précédemment, le procédé de contrôle en boucle fermée de l'injection d'urée n'est utile que dans le cas où le véhicule se trouve dans des conditions de fonctionnement stables.

La première étape 40 du procédé consiste donc à vérifier que l'on a effectivement des conditions stables de roulage. Cette vérification peut, par exemple, être effectuée en mesurant le régime moteur, et/ou la température d'échappement du moteur pendant une certaine durée.

Une fois ces conditions stables détectées, on procède à une injection d'urée supérieure à la quantité initiale injectée (étape 41). Pour cela, on utilise un coefficient d'injection supérieur à 1, par exemple 1.2.

Dans une étape 42, on regarde alors l'évolution des quantités d'oxydes d'azote et d'ammoniac en sortie du catalyseur de réduction SCR. Si la réponse en ammoniac n'augmente pas (événement 43), cela signifie que l'on est toujours en dessous de la quantité d'urée optimale, puisqu'une grande partie de l'oxyde d'azote est consommée, et le dégagement d'ammoniac n'est pas excessif. Dans ce cas, on retourne à l'étape 41, dans laquelle la quantité d'urée est augmentée une nouvelle fois.

En revanche, si la quantité d'oxydes d'azote augmente, cela signifie que l'on a dépassé la quantité optimale d'urée, et que l'on risque de dépasser, dans le même temps, la quantité tolérée d'ammoniac en sortie du moteur. Dans ce cas, on injecte, dans une étape 44, une quantité d'urée plus faible que celle injectée au cours de l'étape 41. Pour cela, on utilise un coefficient d'injection inférieur à 1, par exemple 1/1.1.

Si les quantités mesurées en sortie du catalyseur, au cours de l'étape 39, ne diminuent pas (événement 45), cela signifie qu'il y a toujours trop d'urée. Dans ce cas, on diminue de nouveau la quantité (retour à l'étape 44).

Dans le cas contraire, cela signifie que l'on a trop diminué la quantité d'urée, et que l'on est repassé en dessous de la quantité optimale. Dans ce cas, on augmente de nouveau la quantité d'urée, au cours de l'étape 46, en veillant toutefois à ne pas dépasser la quantité d'urée injectée au cours de la dernière étape 42. Pour cela, on choisit un coefficient d'injection qui est inférieur à l'inverse du coefficient d'injection utilisé au cours de l'étape 44, par exemple 1.05.

On regarde alors, une fois de plus, l'évolution des quantités mesurées en sortie du catalyseur. Si les quantités n'augmentent pas (événement 48), cela signifie que l'on est toujours en dessous de la quantité optimale d'urée, et il est donc nécessaire d'augmenter de nouveau la quantité injectée. En revanche, si les quantités mesurées augmentent, on estime dans ce cas que l'on a atteint la quantité d'urée optimale.

On vérifie alors, au cours d'une étape 49, que le véhicule est toujours dans des conditions stables de roulage, et, si tel est le cas, on calcule alors (étape 50), le facteur de correction finale, correspondant au rapport entre la quantité d'urée optimale et la quantité d'urée initialement injectée.

On constate, au vu de cette description du procédé, que la recherche de la quantité optimale d'urée est en fait réalisée par itération, et en se rapprochant à chaque fois de l'optimum. Un tel procédé est possible parce que la quantité optimale correspondant à une position stable du système, tel qu'on peut le constater sur la figure 5, qui montre l'évolution du débit d'urée et du dégagement d'oxydes d'azote, lorsqu'un procédé, tel que décrit à l'aide de la figure 4, est mis en oeuvre.

En effet, supposons que la quantité initiale injectée soit de 50 grammes par heure (g/h). Dans ce cas, on mesure une quantité d'oxydes d'azote égale à environ 220 parties par millions (ppm). Ces valeurs correspondent au point 51 sur la courbe de la figure 5.

En supposant que le véhicule se trouve dans des conditions stables de roulement, on augmente alors la quantité d'urée injectée, jusqu'à une valeur de 125 g/h. On mesure la quantité d'oxydes d'azote, qui est égale à environ 140 ppm (point 52 sur la courbe).

La mesure ayant diminué, d'après le déroulement logique du procédé décrit à l'aide de la figure 4, on procède à une nouvelle augmentation de la quantité d'urée, jusqu'à atteindre 200 g/h, qui correspond à une quantité d'oxydes d'azote de 175 ppm (point 53). On constate que la quantité de Nox a augmenté, et on va donc diminuer la quantité d'urée.

Au vu du graphe, on comprend que deux situations peuvent se présenter dans ce cas :
- soit on diminue trop la quantité d'urée, et dans ce cas on va se retrouver en amont du point 52, qui correspond au point optimal,
- soit on ne diminue pas assez la quantité d'urée.

Dans les deux cas, les mesures de quantités d'azote permettent de connaître l'action à effectuer pour se rapprocher de la quantité optimale. On constate ainsi que le point 52 correspond à une position stable de la courbe, et que le procédé est tel que cet optimum est obligatoirement atteint après un certain nombre d'étapes.

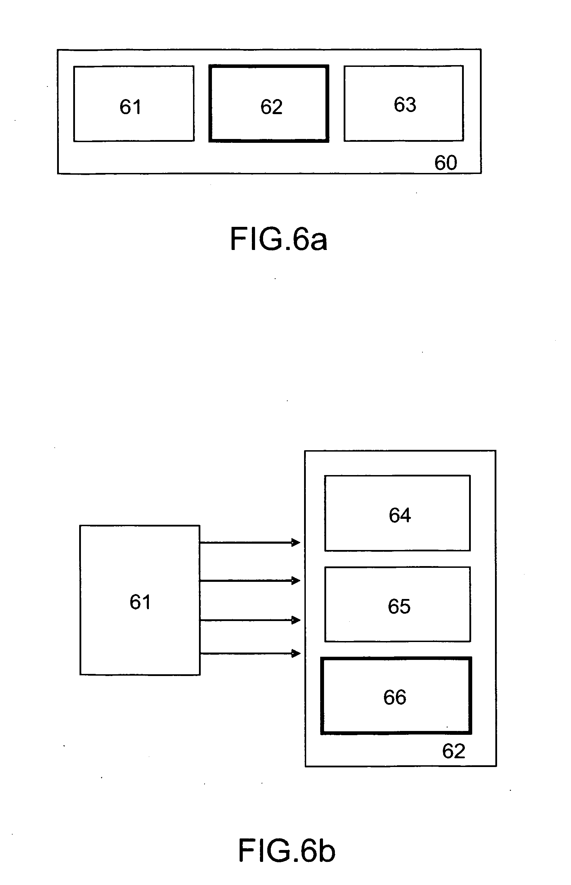

Un procédé tel que celui décrit ici, est destiné à être intégré dans une stratégie globale 60 d'injection de pilotage SCR. Une telle stratégie, décrite à l'aide des figures 6a et 6b, est mise en oeuvre par le biais de plusieurs modules, parmi lesquels un module 61 d'estimation de grandeurs physiques, un module 62 de pilotage d'injection d'urée, à proprement parler, et un module 63 de contrôle de l'urée embarquée dans le véhicule sur lequel la stratégie est mise en oeuvre.

De manière plus précise, un procédé selon l'invention est mis en place dans un sous-module 66 de contrôle en boucle fermée de la quantité d'urée à injecter, ce sous-module 66 étant intégré dans le module 62 de pilotage de l'injection.

Ce module 62 comprend également un sous-module 65 de calcul de la quantité d'urée à injecter et un sous-module 64 de contrôle de la consommation d'urée.

La quantité d'urée calculée par le sous-module 65, à l'aide des grandeurs physiques calculées par module 61 d'estimation de grandeurs physiques, peut être utilisée en tant que quantité initiale pour un procédé tel que décrit ici.

## Revendications

1. Procédé de contrôle de la quantité d'urée injectée dans un système de traitement d'oxydes d'azote à réduction catalytique sélective, dite SCR, destiné à être installé dans la ligne d'échappement du moteur d'un véhicule, le traitement consistant à réduire chimiquement, dans un catalyseur, dit catalyseur SCR, les oxydes d'azote en ajoutant de l'ammoniac contenu dans de l'urée, le procédé comprenant les étapes suivantes:
- on injecte dans le système une quantité d'urée initiale calculée à l'aide d'un modèle prédéterminé prenant en compte des paramètres du moteur et de l'environnement,
- on mesure, à l'issue de cette injection, les quantités d'oxydes d'azote et d'ammoniac en sortie du catalyseur SCR au moyen d'un capteur présentant une non-sélectivité ammoniac/oxydes d'azote,
- on injecte une nouvelle quantité correspondant à la quantité précédemment injectée multipliée par un coefficient d'injection initial supérieur à 1,
- on mesure les quantités d'oxydes d'azote et d'ammoniac en sortie du catalyseur SCR et on les compare aux valeurs précédemment mesurées, et
- en fonction de l'évolution des quantités mesurées, on calcule un nouveau coefficient d'injection, supérieur à 1, appelé coefficient de sur injection lorsque les quantités mesurées d'oxydes oxydes d'azote et d'ammoniac sont en diminution ou au contraire inférieur à 1, appelé coefficient de sous injection lorsque les quantités mesurées d'oxydes d'azote et d'ammoniac sont en augmentation,
les trois dernières étapes étant répétées jusqu'à atteindre une quantité optimale d'urée
et en ce que lorsque les quantités d'oxydes d'azote et d'ammoniac diminuent après avoir augmenté, on applique un coefficient de sur injection inférieur à l'inverse du coefficient de sous injection précédemment appliqué, et la nouvelle quantité d'urée calculée à partir de ce coefficient de sur injection est la quantité optimale d'urée à injecter.

2. Procédé selon la revendication 1 dans lequel, on détermine un facteur de correction finale, correspondant à la quantité d'urée optimale divisée par la quantité initiale d'urée.

3. Procédé selon les revendications 1 dans lequel, lorsque les quantités d'oxydes d'azote et d'ammoniac augmentent après avoir diminué, le nouveau coefficient de sous injection appliqué est supérieur à l'inverse du coefficient de sur injection précédemment appliqué.

4. Procédé selon l'une des revendications précédentes dans lequel on modifie la quantité d'urée injectée uniquement dans le cas où des conditions de roulage stables se présentent.

5. Procédé selon l'une des revendications précédentes dans lequel l'urée est sous forme d'urée liquide pure ou de solution d'urée.

## Claims

1. Method for controlling the quantity of urea injected into a nitrogen oxide processing system with selective catalytic reduction, known as SCR, which is intended for installation in the exhaust line of the engine of a vehicle, the processing consisting in chemically reducing the nitrogen oxides in a catalytic converter known as an SCR catalytic converter by adding ammonia contained in urea, the method comprising the following steps:
- an initial quantity of urea, calculated using a predetermined model taking into account the parameters of the engine and of the environment, is injected into the system,
- after this injection, the quantities of nitrogen oxides and ammonia at the outlet of the SCR catalytic converter are measured by means of a sensor having a non-selectivity for ammonia/nitrogen oxides,
- a new quantity is injected, corresponding to the previously injected quantity multiplied by an initial injection coefficient greater than 1,
- the quantities of nitrogen oxides and ammonia at the outlet of the SCR catalytic converter are measured and are compared to the previously measured values, and
- as a function of the change in the measured quantities, a new injection coefficient is calculated, which is greater than 1 and known as the overinjection coefficient when the measured quantities of nitrogen oxides and ammonia are decreasing or on the contrary is less than 1 and known as the underinjection coefficient when the measured quantities of nitrogen oxides and ammonia are increasing,
the last three steps being repeated until an optimal quantity of urea is reached,
and in that, when the quantities of nitrogen oxides and ammonia decrease after having increased, an overinjection coefficient is applied which is less than the reciprocal of the previously applied underinjection coefficient, and the new quantity of urea calculated on the basis of this overinjection coefficient is the optimal quantity of urea to be injected.

2. Method according to claim 1, in which a final correction factor is determined, corresponding to the optimal quantity of urea divided by the initial quantity of urea.

3. Method according to claim 1, in which, when the quantities of nitrogen oxides and ammonia increase after having decreased, the new underinjection coefficient that is applied is greater than the reciprocal of the previously applied overinjection coefficient.

4. Method according to one of the preceding claims, in which the quantity of urea injected is modified only in the case where stable travelling conditions exist.

5. Method according to one of the preceding claims, in which the urea is in the form of pure liquid urea or urea solution.

## Patentansprüche

1. Verfahren zur Regelung der Harnstoffmenge, die in ein System zur Behandlung von Stickstoffoxiden mit selektiver katalytischer Reduktion, einer so genannten SCR, eingespritzt wird, vorgesehen für den Einbau in die Abgasleitung des Motors eines Fahrzeugs, wobei die Behandlung darin besteht, in einem Katalysator, einem so genannten SCR-Katalysator, die Stickstoffoxide durch Hinzufügung von in dem Harnstoff enthaltenem Ammoniak chemisch zu reduzieren, wobei das Verfahren folgende Schritte umfasst:
- Einspritzung einer anfänglichen Harnstoffmenge, die mit Hilfe eines vorherbestimmten Modells berechnet wird, das Parameter des Motors und der Umgebung berücksichtigt, in das System,
- Messung der Mengen von Stickstoffoxiden und Ammoniak am Ausgang des SCR-Katalysators mittels eines Messfühlers, der eine Nicht-Selektivität für Ammoniak/Stickstoffoxide aufweist, nach dieser Einspritzung,
- Einspritzung einer neuen Menge, die der zuvor eingespritzten Menge multipliziert mit einem anfänglichen Einspritzkoeffizienten von mehr als 1 entspricht,
- Messung der Mengen von Stickstoffoxiden und Ammoniak am Ausgang des SCR-Katalysators und Vergleich mit den zuvor gemessenen Werten und
- in Abhängigkeit von der Entwicklung der gemessenen Mengen Berechnung eines neuen Einspritzkoeffizienten von mehr als 1, der als Übereinspritzungskoeffizient bezeichnet wird, wenn die gemessenen Mengen von Stickstoffoxiden und Ammoniak abnehmen, oder hingegen von weniger als 1, der als Untereinspritzungskoeffizient bezeichnet wird, wenn die gemessenen Mengen von Stickstoffoxiden und Ammoniak zunehmen,
wobei die letzten drei Schritte solange wiederholt werden, bis eine optimale Menge von Harnstoff erreicht ist,
und wobei, wenn die Mengen von Stickstoffoxiden und Ammoniak abnehmen, nachdem sie zugenommen haben, ein Übereinspritzungskoeffizient auf den Kehrwert des zuvor angewendeten Untereinspritzungskoeffizienten angewendet wird und die neue Harnstoffmenge, die ausgehend von diesem Übereinspritzungskoeffizienten berechnet wird, die optimale einzuspritzende Harnstoffmenge ist.

2. Verfahren nach Anspruch 1, wobei ein Endkorrekturfaktor bestimmt wird, welcher der optimalen Harnstoffmenge geteilt durch die anfängliche Harnstoffmenge entspricht.

3. Verfahren nach Anspruch 1, wobei, wenn die Mengen von Stickstoffoxiden und Ammoniak zunehmen, nachdem sie abgenommen haben, der neue angewendete Untereinspritzkoeffizient größer ist als der Kehrwert des zuvor angewendeten Übereinspritzkoeffizienten.

4. Verfahren nach einem der vorhergehenden Ansprüche, wobei die Menge des eingespritzten Harnstoffs nur geändert wird, falls gleichbleibende Fahrtbedingungen vorliegen.

5. Verfahren nach einem der vorhergehenden Ansprüche, wobei der Harnstoff in Form von reinem flüssigen Harnstoff oder von Harnstofflösung vorliegt.
